# EUROPEAN PATENT APPLICATION

(11) **EP 4 844 565 A1**
(43) Date of publication of application: **25.11.2026**
(21) Application number: 25212408.6
(22) Date of filing: 30.10.2025
(51) Int. Cl.: G06F 3/12, G06F 1/324

(54) **INFORMATION PROCESSING SYSTEM, PROGRAM, AND INFORMATION PROCESSING METHOD**

(30) Priority: 20.05.2025 JP 2025084103
(71) Applicant: FUJIFILM Business Innovation Corp., Minato-ku Tokyo (JP)
(72) Inventor: MAMIYA, Akiyuki, Yokohama-shi, Kanagawa (JP)
(74) Representative: Becker Kurig & Partner Patentanwälte mbB

(57) **Abstract**

An information processing system includes a processor configured to: calculate a first processing time assuming that a processing device that operates at a maximum clock frequency executes routine processing on an image included in a print job; and control a clock frequency used by the processing device for image processing defined in the print job such that the image processing ends within the calculated first processing time.

## Description

### BACKGROUND OF THE INVENTION

### (i) Field of the Invention

The present invention relates to an information processing system, a program, and an information processing method.

### (ii) Description of Related Art

A print server including an image processing accelerator is known. The image processing accelerator executes high-load image processing before a print job is transmitted to a printing device. For example, resolution adjustment, color conversion, font processing, and layout adjustment are executed. The image processing accelerator executes the image processing at a high clock frequency (hereinafter, also referred to as a "maximum clock frequency"). This results in considerable power consumption.

### SUMMARY OF THE INVENTION

Some image processing accelerators have a function of transitioning to an idling state in a case where an idle time occurs before a timing at which image processing of a next print job is started. In a case of transitioning to the idling state, an operating clock is switched to a clock frequency lower than the maximum clock frequency. By this switching, reduction in power consumption is achieved as compared to a case where the operation is performed at the maximum clock frequency during the idle time. However, since the maximum clock frequency is used for the image processing of the print job, considerable power is still consumed.

An object of the present invention is to achieve reduction in power consumption within a processing time allocated to a print job as compared to a case where an idle time of image processing is controlled to an idling period.

According to a first aspect of the present disclosure, there is provided an information processing system including: a processor configured to: calculate a first processing time assuming that a processing device that operates at a maximum clock frequency executes routine processing on an image included in a print job; and control a clock frequency used by the processing device for image processing defined in the print job such that the image processing ends within the calculated first processing time.

According to a second aspect of the present disclosure, in the information processing system according to the first aspect, the processor may be configured to: control the clock frequency used for the image processing based on a relationship between the first processing time and a second processing time in a case where the image processing is executed at the maximum clock frequency.

According to a third aspect of the present disclosure, in the information processing system according to the second aspect, the processor may be configured to: in a case where the second processing time is shorter than the first processing time, reduce the clock frequency to be lower than the maximum clock frequency such that the image processing ends within the first processing time.

According to a fourth aspect of the present disclosure, in the information processing system according to any one of the first to third aspects, the processor may be configured to: in a case where a part of the routine processing is not executed in the image processing, reduce the clock frequency to be lower than the maximum clock frequency such that the image processing ends within the first processing time.

According to a fifth aspect of the present disclosure, in the information processing system according to the fourth aspect, the processor may be configured to: in a case where the routine processing is executed as the image processing, use the maximum clock frequency for the image processing.

According to a sixth aspect of the present disclosure, in the information processing system according to any one of the first to fifth aspects, the processor may be configured to: in a case where the first processing time is denoted by wTotal, and an expected time required for the processing device to execute processing content that is not executed in the print job in the routine processing at the maximum clock frequency denoted by refF is denoted by wT, calculate a time esT required for the processing device that operates at the maximum clock frequency refF to execute processing content of the image processing as esT = wTotal - wT; and calculate a new clock frequency newF that enables the processing content of the image processing to end within the first processing time as newF = (esT/wTotal) × refF.

According to a seventh aspect of the present disclosure, in the information processing system according to any one of the first to sixth aspects, the processor may be configured to: in a case where at least a part of a third processing time during which processing other than printing executed by a printing device overlaps the first processing time, control the clock frequency used by the processing device for the image processing such that the image processing ends within a total time of an overlap time between the first processing time and the third processing time and the first processing time.

According to an eighth aspect of the present disclosure, in the information processing system according to the seventh aspect, the processor may be configured to: in a case where the first processing time is denoted by wTotal, an expected time required for the processing device to execute processing content that is not executed in the print job in the routine processing at the maximum clock frequency denoted by refF is denoted by wT, and the overlap time is denoted by imgQT, calculate a time esT required for the processing device that operates at the maximum clock frequency refF to execute the image processing as esT = wTotal - wT; and calculate a new clock frequency newF that enables the image processing to end within the total time as newF = (esT/(wTotal + imgQT)) × refF.

According to a ninth aspect of the present disclosure, in the information processing system according to any one of the first to eighth aspects, the processing device may be an image processing accelerator.

According to a tenth aspect of the present disclosure, there is provided a program causing a computer to implement: a function of calculating a first processing time assuming that a processing device that operates at a maximum clock frequency executes routine processing on an image included in a print job; and a function of controlling a clock frequency used by the processing device for image processing of processing content defined in the print job such that the image processing ends within the calculated first processing time.

According to an eleventh aspect of the present disclosure, there is provided an information processing method including: calculating a first processing time assuming that a processing device that operates at a maximum clock frequency executes routine processing on an image included in a print job; and controlling a clock frequency used by the processing device for image processing of processing content defined in the print job such that the image processing ends within the calculated first processing time.

According to the first aspect of the present disclosure, the reduction in power consumption within the processing period allocated to the print job may be achieved as compared to a case where the idle time of the image processing is controlled to the idling period.

According to the second aspect of the present disclosure, the power consumption within the processing time allocated to the print job may be controlled based on the relationship between the image processing and the routine processing.

According to the third aspect of the present disclosure, the power consumption within the processing time allocated to the print job may be reduced in a case where the processing time required for the image processing at the maximum clock frequency is shorter than the processing time required for the routine processing at the maximum clock frequency.

According to the fourth aspect of the present disclosure, the power consumption within the processing time allocated to the print job may be reduced in a case where a part of the routine processing is not executed in the image processing.

According to the fifth aspect of the present disclosure, in the print job in which the routine processing is executed as the image processing, the completion of the image processing within the processing time allocated to the print job may be prioritized.

According to the sixth aspect of the present disclosure, the clock frequency used for the image processing may be calculated in accordance with the processing content of the image processing.

According to the seventh aspect of the present disclosure, the standby time of the processing device that occurs in order for the printing device to execute the processing other than the printing may be used to reduce the clock frequency.

According to the eighth aspect of the present disclosure, the power consumption in the image processing may be reduced.

According to the ninth aspect of the present disclosure, the power consumption of the image processing accelerator may be reduced.

According to the tenth aspect of the present disclosure, the reduction in power consumption within the processing period allocated to the print job may be achieved as compared to a case where the idle time of the image processing is controlled to the idling period.

According to the eleventh aspect of the present disclosure, the reduction in power consumption within the processing period allocated to the print job may be achieved as compared to a case where the idle time of the image processing is controlled to the idling period.

### BRIEF DESCRIPTION OF THE DRAWINGS

Exemplary embodiment(s) of the present invention will be described in detail based on the following figures, wherein:
FIG. 1 is a diagram showing a configuration example of a printing system according to Exemplary Embodiment 1;
FIG. 2 is a diagram showing a hardware example of a print server;
FIG. 3 is a diagram showing an example of a table structure adopted in an execution time table;
FIG. 4 is a diagram showing a function of controlling a clock frequency by a processor;
FIG. 5 is a flowchart showing control processing of the clock frequency by the processor;
FIG. 6 is a diagram showing a relationship between an execution schedule of an image processing accelerator and an execution schedule of a printing apparatus;
FIG. 7 is a flowchart showing an example of processing content executed in step S15;
FIG. 8 is a flowchart showing an example of processing content executed in step S17;
FIG. 9 is a diagram showing an example of power consumption in a case where a processing period allocated to a print job and an image quality adjustment period of the printing apparatus do not overlap;
FIG. 10 is a diagram showing another example of the power consumption in a case where the processing period allocated to the print job and the image quality adjustment period of the printing apparatus do not overlap;
FIG. 11 is a diagram showing still another example of the power consumption in a case where the processing period allocated to the print job and the image quality adjustment period of the printing apparatus do not overlap;
FIG. 12 is a diagram showing an example of power consumption in a case where the processing period allocated to the print job and the image quality adjustment period of the printing apparatus overlap;
FIG. 13 is a diagram showing another example of the power consumption in a case where the processing period allocated to the print job and the image quality adjustment period of the printing apparatus overlap;
FIG. 14 is a diagram showing still another example of the power consumption in a case where the processing period allocated to the print job and the image quality adjustment period of the printing apparatus overlap; and
FIG. 15 is a flowchart showing control processing of a clock frequency by a processor according to Exemplary Embodiment 2.

### DETAILED DESCRIPTION OF THE INVENTION

Hereinafter, exemplary embodiments of the present invention will be described with reference to the drawings.

### <Terms>

The "print job" is a unit of print processing, and is also a unit of management. The print job includes setting information and print data.

The setting information includes settings related to printing. The settings related to printing include, for example, settings related to paper, settings related to printing quality, settings related to layout, and management information of the job.

The settings related to paper include, for example, paper size, type of paper, and whether or not two-sided printing is executed. The settings related to printing quality include, for example, resolution, whether or not color printing is executed, and a print mode.

The print data includes image data as content. The print data is described in, for example, page description language (PDL) data, line conditioned data stream (LCDS) data, or intelligent printer data stream (IPDS) data.

### <Exemplary Embodiment 1>

### <System Configuration>

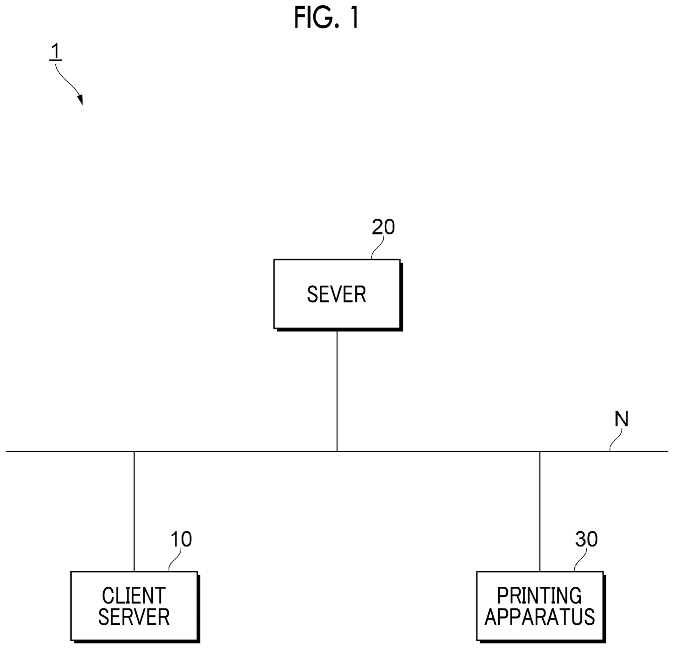

FIG. 1 is a diagram showing a configuration example of a printing system 1 according to Exemplary Embodiment 1.

The printing system 1 shown in FIG. 1 includes a client terminal 10, a print server 20, a printing apparatus 30, and a network N that connects these components.

For example, a local area network (LAN) is used as the network N. The LAN may be a wired LAN or a wireless LAN. The network N may be, for example, a mobile communication system such as 4G or 5G, or the Internet.

The client terminal 10 is a so-called user terminal. The client terminal 10 includes, for example, a desktop computer terminal, a laptop computer terminal, a tablet computer terminal, and a smartphone. The client terminal according to the present exemplary embodiment has a function of generating a print job and transmitting the print job to the print server 20. The number of client terminals 10 may be one or more.

The print server 20 is a terminal that accommodates one or more client terminals 10 and one or more printing apparatuses 30. The print server 20 according to the present exemplary embodiment is prepared separately from the printing apparatus 30. However, the print server 20 may be accommodated integrally with the printing apparatus 30. In this case, the print server 20 executes adjustment of an execution order of the print job with respect to a specific printing apparatus 30 that accommodates the print server 20.

The print server 20 according to the present exemplary embodiment includes an image processing accelerator. The image processing accelerator is an example of a processing device that is responsible for high-load image processing. Examples of the high-load image processing include rasterization, halftone processing, resolution adjustment, color conversion, image correction, font processing, and layout adjustment.

The print server 20 according to the present exemplary embodiment is an example of an information processing system.

The printing apparatus 30 is a device that forms an image on a recording medium such as paper by executing the print job. The printing apparatus 30 is, for example, an apparatus dedicated to printing. However, the printing apparatus 30 may have a function of optically reading an image of a document (so-called scanning function) and a function of forming the optically read image on paper (so-called copying function). The number of printing apparatuses 30 may be one or more. The printing apparatus 30 may be an apparatus assumed to be used in an office or at home, or may be an apparatus assumed to execute mass printing such as commercial printing.

A printing method of the printing apparatus 30 may be an electrophotographic method or an inkjet method.

The printing apparatus 30 according to the present exemplary embodiment is an example of a printing device. In addition, the printing apparatus 30 is also an example of an image forming apparatus. The printing apparatus 30 that accommodates the print server 20 is an example of an information processing system.

### <Hardware of Print Server>

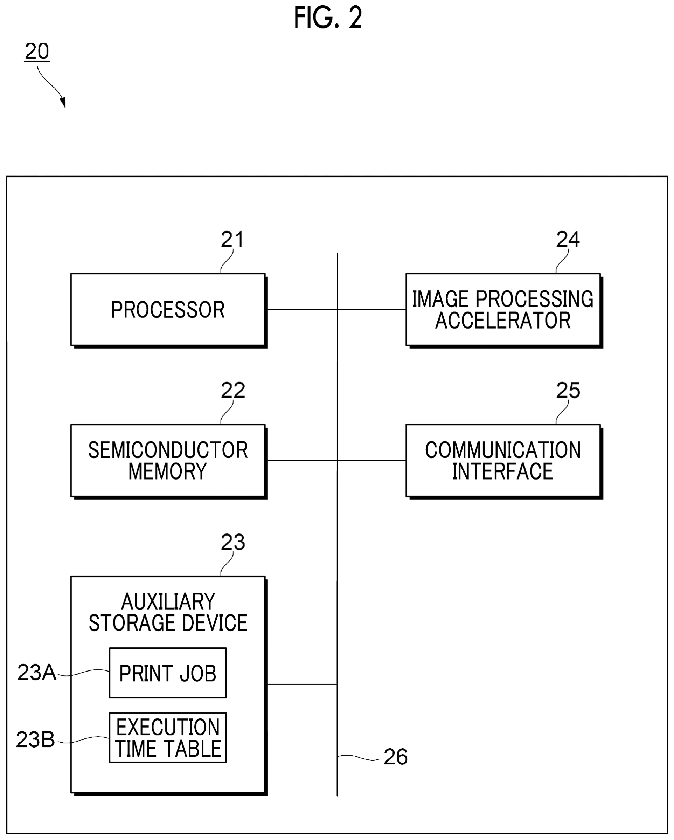

FIG. 2 is a diagram showing a hardware example of the print server 20.

The print server 20 shown in FIG. 2 includes a processor 21, a semiconductor memory 22, an auxiliary storage device 23, an image processing accelerator 24, and a communication interface 25. The respective devices are connected via a bus and another signal line 26.

The processor 21 is a device that implements various functions by executing a program. The program here is a general term for an operating system (OS) and application programs.

The processor 21 executes, for example, management of the print job and control of an operating clock of the image processing accelerator 24 by executing the program. The operating clock is controlled for each print job. Details of the control of the operating clock will be described later.

The semiconductor memory 22 includes, for example, a read only memory (ROM) in which a unified extensible firmware interface (UEFI) or the like is stored, and a random access memory (RAM) used as a work area for the processor.

The auxiliary storage device 23 is configured with, for example, a hard disk device or a semiconductor storage. The auxiliary storage device 23 stores the program and other data. The other data includes, for example, a print job 23A and an execution time table 23B.

The print job 23A is provided from the client terminal 10 (see FIG. 1).

The execution time table 23B is a table that stores, for each resolution, a maximum time (or longest time) required for the image processing in a case where the image processing accelerator 24 operates at the fastest operating clock (that is, the maximum clock frequency). A specific example of the execution time table 23B will be described later.

The image processing accelerator 24 is an example of a processing device that executes a plurality of image processing operations (hereinafter, also referred to as "routine processing") defined by an image processing algorithm. The image processing accelerator 24 does not need to be dedicated to the image processing of the print job 23A. The image processing accelerator 24 according to the present exemplary embodiment is also used for another image processing (hereinafter, referred to as "another task") other than the image processing of the print job 23A.

The routine processing provides a maximum range of a combination of the image processing operations. Examples of the image processing included in the routine processing include rasterization, halftone processing, resolution adjustment, color conversion, image correction, font processing, and layout adjustment.

The image processing executed by the image processing accelerator 24 is defined by the setting information of the print job. In the setting information, the content of the image processing is specified by the type.

In the setting information, for example, the execution of the image processing corresponding to the routine processing is defined. However, in the setting information, the execution of only a part of the routine processing may be defined. In other words, in the setting information, a part of the image processing included in the routine processing may be defined to be skipped (that is, not executed).

In a case where one print job is input, the image processing accelerator 24 executes the image processing defined by the print job and outputs one print job including the print data after the image processing.

For example, a graphics processing unit (GPU), a field-programmable gate array (FPGA), an application-specific integrated circuit (ASIC), a dedicated image processing unit (IPU), or a neural processing unit (NPU) is used as the image processing accelerator 24. In the present exemplary embodiment, the image processing accelerator 24 is configured by a GPU.

The image processing accelerator 24 is provided separately from the processor 21 as a processing device specialized for the image processing.

The image processing accelerator 24 according to the present exemplary embodiment includes a clock source that generates the operating clock. The clock source according to the present exemplary embodiment can generate any clock frequency indicated by the processor 21. For example, the clock source includes a phase-locked loop (PLL) circuit. The clock source may be prepared separately from the image processing accelerator 24.

The communication interface 25 is used for communication with the client terminal 10 (see FIG. 1), the printing apparatus 30 (see FIG. 1), and the like.

### <Execution Time Table>

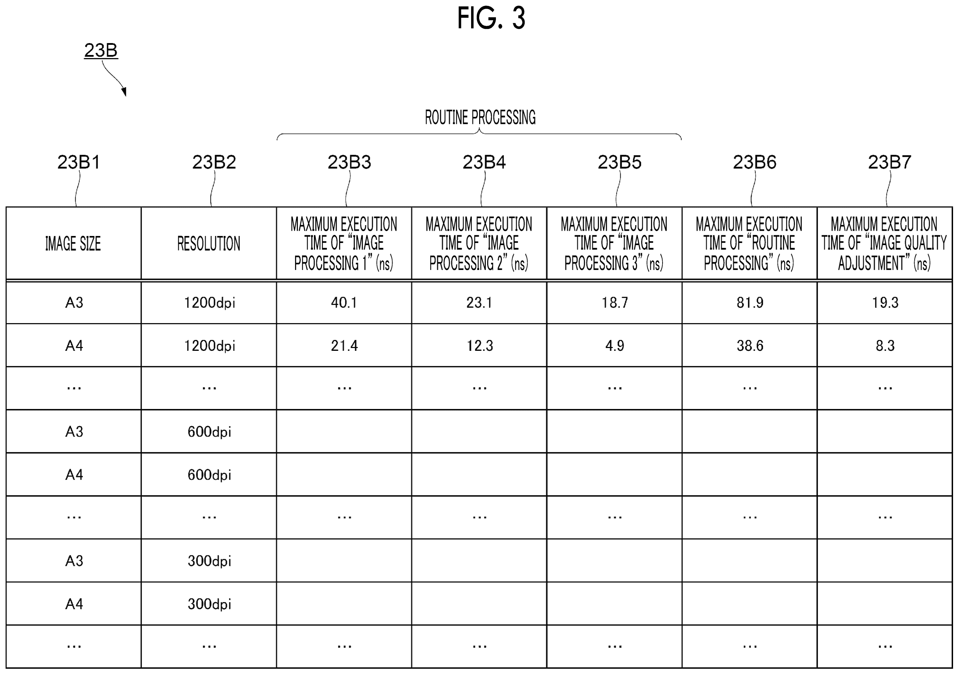

FIG. 3 is a diagram showing an example of a table structure adopted in the execution time table 23B. The execution time table 23B shown in FIG. 3 includes a plurality of items.

One of the items is an image size 23B1. The image size 23B1 is information indicating vertical and horizontal widths of the image. In the present exemplary embodiment, the image size 23B1 is treated as a paper size such as A3 or A4. The image size 23B1 or the paper size is defined by the setting information of the print job 23A (see FIG. 2).

One of the items is a resolution 23B2. The resolution 23B2 is an index representing level of detail required for the image to be printed. The resolution 23B2 is represented, for example, in dots per inch (dpi). Naturally, the larger the numerical value, the higher the dot density and the higher the print quality. On the other hand, the smaller the numerical value, the lower the dot density and the lower the print quality. FIG. 3 shows 1200 dpi, 600 dpi, and 300 dpi as examples. The resolution 23B2 is defined by the setting information of the print job 23A (see FIG. 2).

One of the items is a maximum execution time 23B3 of "image processing 1". The "image processing 1" is one of the image processing operations included in the routine processing. For convenience of description, it is assumed that the routine processing includes three image processing operations: "image processing 1", "image processing 2", and "image processing 3". The "image processing 1", the "image processing 2", and the "image processing 3" are, for example, any of rasterization, halftone processing, resolution adjustment, color conversion, image correction, font processing, or layout adjustment.

The maximum execution time refers to a maximum length of a time required for the image processing accelerator 24 that operates at the maximum clock frequency to execute the "image processing 1". More specifically, the maximum execution time is defined by a maximum length of a time required from the start to the end of the "image processing 1" on the print data (that is, the image). The maximum execution time may be, for example, an actually measured value or a theoretical value.

The maximum execution time is required to be longer than a processing time of any print data that is a processing target.

FIG. 3 shows that 40.1 nanoseconds (ns) are required for the processing of the print data of the A3 size having a resolution of 1200 dpi. In addition, FIG. 3 shows that 21.4 nanoseconds (ns) are required for the processing of the print data of the A4 size having a resolution of 1200 dpi.

One of the items is a maximum execution time 23B4 of the "image processing 2". As described above, the "image processing 2" is one of the image processing operations constituting the routine processing. The maximum execution time 23B4 of the "image processing 2" gives a maximum length of a time required for the image processing accelerator 24 that operates at the maximum clock frequency to execute the "image processing 2".

FIG. 3 shows that 23.1 nanoseconds (ns) are required for the processing of the print data of the A3 size having a resolution of 1200 dpi. In addition, FIG. 3 shows that 12.3 nanoseconds (ns) are required for the processing of the print data of the A4 size having a resolution of 1200 dpi.

One of the items is a maximum execution time 23B5 of the "image processing 3". As described above, the "image processing 3" is one of the image processing operations constituting the routine processing. The maximum execution time 23B5 of the "image processing 3" gives a maximum length of a time required for the image processing accelerator 24 that operates at the maximum clock frequency to execute the "image processing 3".

FIG. 3 shows that 18.7 nanoseconds (ns) are required for the processing of the print data of the A3 size having a resolution of 1200 dpi. In addition, FIG. 3 shows that 4.9 nanoseconds (ns) are required for the processing of the print data of the A4 size having a resolution of 1200 dpi.

One of the items is a maximum execution time 23B6 of the "routine processing". As described above, the "routine processing" includes three image processing operations: "image processing 1", "image processing 2", and "image processing 3". Therefore, the maximum execution time 23B6 of the "routine processing" gives a maximum length of a time required for the image processing accelerator 24 that operates at the maximum clock frequency to execute all of the "image processing 1", the "image processing 2", and the "image processing 3". The time of the maximum execution time 23B6 of the "routine processing" is defined by a total time of the maximum execution time of the "image processing 1", the maximum execution time of the "image processing 2", and the maximum execution time of the "image processing 3".

One of the items is a maximum execution time 23B7 of "image quality adjustment". The "image quality adjustment" is a processing operation executed by the printing apparatus 30 (see FIG. 1). The "image quality adjustment" includes, for example, automatic tone correction.

The maximum execution time 23B7 of the "image quality adjustment" gives a maximum length of a time required for the printing apparatus 30 (see FIG. 1) to execute the image quality adjustment.

Hereinafter, the maximum execution time 23B7 of the "image quality adjustment" will also be referred to as an "image quality adjustment period".

FIG. 3 shows that 19.3 nanoseconds are required for the processing of the print data of the A3 size having a resolution of 1200 dpi. In addition, FIG. 3 shows that 8.3 nanoseconds are required for the processing of the print data of the A4 size having a resolution of 1200 dpi.

### <Function of Controlling Clock Frequency>

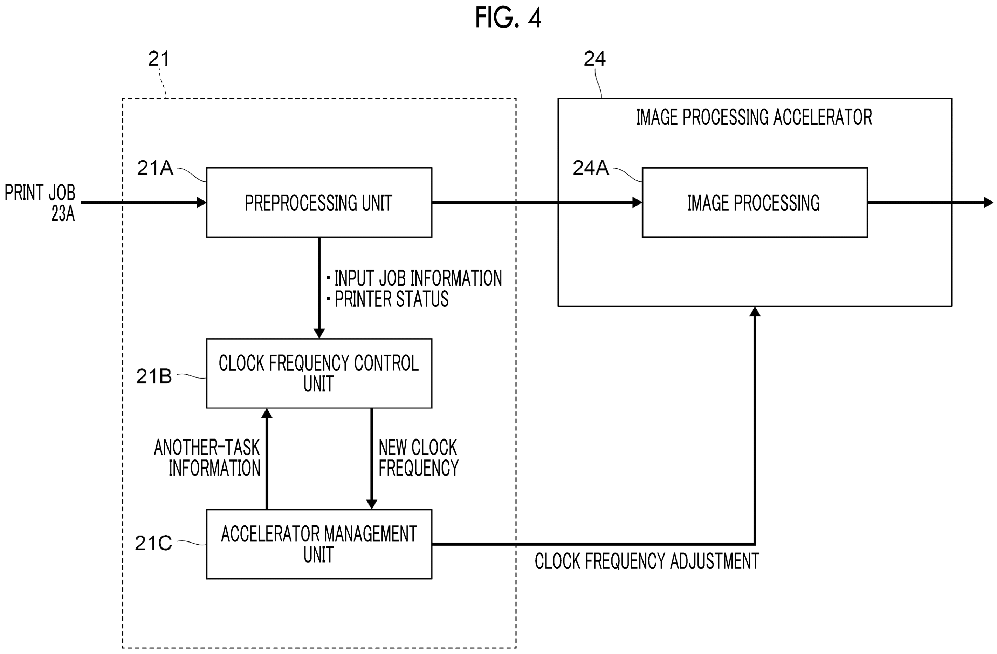

FIG. 4 is a diagram showing a function of controlling the clock frequency by the processor 21. In FIG. 4, parts corresponding to the parts in FIG. 2 are denoted by the same reference numerals.

FIG. 4 shows three functional units implemented by the processor 21 executing the program.

### <Preprocessing Unit>

One of the functional units is a preprocessing unit 21A. The preprocessing unit 21A is implemented by executing preprocessing software.

The preprocessing unit 21A has a sub-function of acquiring information (that is, "input job information") on the print job 23A from the print job 23A input as the processing target and providing the information to a clock frequency control unit 21B. The input job information includes at least the image size, the resolution, and the type of the image processing. The input job information is acquired from the setting information of the print job 23A. The input job information is acquired, for example, at a timing at which the print job 23A is received from the client terminal 10 (see FIG. 1).

The preprocessing unit 21A has a sub-function of acquiring a status (that is, a printer status) of the printing apparatus 30 (see FIG. 1) by communicating with the printing apparatus 30. The preprocessing unit 21A communicates with the printing apparatus 30 in real time to acquire the printer status. The printer status includes, for example, an execution schedule of the image quality adjustment.

These sub-functions are executed before image processing 24A of a target job (that is, the print job 23A) by the image processing accelerator 24 is started.

The image processing 24A is defined by the setting information of the print job 23A. In addition, a time at which the image processing 24A of the target job is started is determined before the processing of the print job 23A being executed is started.

In addition, the preprocessing unit 21A has a sub-function of outputting the target job to the image processing accelerator 24 in a case where the timing at which the image processing 24A of the target job is started arrives.

### <Clock Frequency Control Unit>

One of the functional units is the clock frequency control unit 21B. The clock frequency control unit 21B is implemented by executing control software. There is one image processing accelerator 24 that is a control target of the clock frequency control unit 21B. In other words, there is one image processing accelerator 24 that is controlled by the clock frequency control unit 21B.

The clock frequency control unit 21B has a sub-function of acquiring model information of the image processing accelerator 24 at the time of the start of the print server 20 (see FIG. 1). The model information includes a maximum frequency (that is, the maximum clock frequency) of the operating clock used by the image processing accelerator 24.

The clock frequency control unit 21B has a sub-function of acquiring the type of the routine processing executed by the image processing accelerator 24 at the time of the start of the print server 20 (see FIG. 1). The type of the routine processing is acquired, for example, as the type of the image processing algorithm. The type of the routine processing defines, for example, a combination of the "image processing 1", the "image processing 2", and the "image processing 3".

The clock frequency control unit 21B has a sub-function of acquiring the input job information and the printer status from the preprocessing unit 21A. The input job information and the printer status are acquired before the image processing 24A of the target job by the image processing accelerator 24 is started. As described above, the input job information includes at least the image size, the resolution, and the type of the image processing.

The clock frequency control unit 21B has a sub-function of acquiring the execution time table 23B (see FIGS. 2 and 3) at the time of the start of the print server 20.

The clock frequency control unit 21B has a sub-function of communicating with an accelerator management unit 21C.

The clock frequency control unit 21B has a sub-function of acquiring information (that is, another-task information) on whether or not there is another task using the image processing accelerator 24 from the accelerator management unit 21C.

The clock frequency control unit 21B has a sub-function of setting the clock frequency (that is, a new clock frequency) used for the image processing 24A of the target job (that is, the print job 23A) in the accelerator management unit 21C.

The setting of the new clock frequency is executed for each target job. The setting of the new clock frequency is executed before the image processing 24A of the target job is started by the image processing accelerator 24. The new clock frequency depends on the content of the image processing 24A and the like.

### <Accelerator Management Unit>

One of the functional units is the accelerator management unit 21C. The accelerator management unit 21C is implemented by executing accelerator management software. The accelerator management unit 21C manages the image processing accelerator 24.

The accelerator management unit 21C has a sub-function of adjusting the clock frequency used by the image processing accelerator 24 for the image processing 24A of the target job. As described above, the information on the new clock frequency used for the target job is notified from the clock frequency control unit 21B.

The adjustment of the clock frequency by the image processing accelerator 24 using the sub-function is executed for each target job.

However, in a case where the clock frequency used for the target job to be started next is the same as the currently used clock frequency, the image processing accelerator 24 may skip the adjustment of the clock frequency.

The accelerator management unit 21C has a sub-function of monitoring whether or not there is another task using the image processing accelerator 24. As described above, the presence or absence of another task is notified to the clock frequency control unit 21B as the another-task information.

### <Control Processing of Clock Frequency>

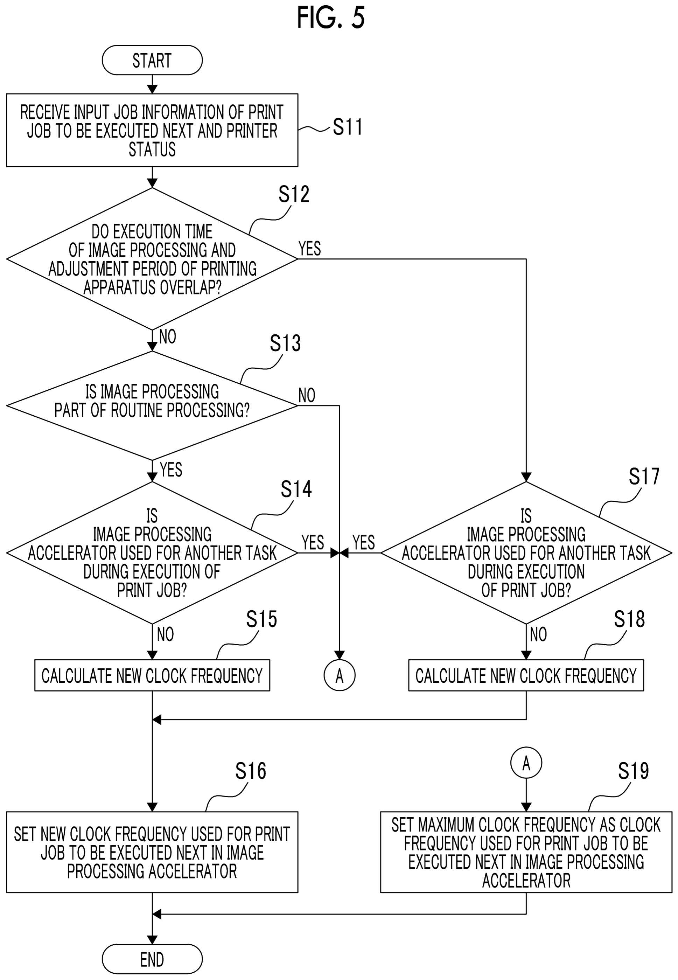

FIG. 5 is a flowchart showing control processing of the clock frequency by the processor 21 (see FIG. 4). The symbol S in the drawing means a step.

Each step is implemented by cooperation among the preprocessing unit 21A (see FIG. 4), the clock frequency control unit 21B (see FIG. 4), and the accelerator management unit 21C (see FIG. 4).

### <Step S11>

First, the processor 21 receives the input job information and the printer status of the print job 23A (see FIG. 2) to be executed next.

However, the input job information and the printer status are not limited to the input job information and the printer status of the print job 23A to be executed next as long as the set clock frequency is managed to be used for the image processing 24A (see FIG. 4) of the corresponding print job 23A.

For example, the input job information and the printer status of the print job 23A to be executed next and the print job 23A to be executed after the next may be received. However, the printer status also affects the setting of the clock frequency. Therefore, in the present exemplary embodiment, the print job 23A to be executed next is set as the processing target.

### <Step S12>

Next, the processor 21 determines whether or not an execution period of the image processing 24A overlaps the image quality adjustment period of the printing apparatus 30 (see FIG. 1). The image processing 24A here is the image processing defined by the setting information of the print job 23A to be executed next.

The execution period is defined by a point in time at which the image processing 24A is started and the maximum execution time 23B6 (see FIG. 3) of the "routine processing". The execution period is an example of a first processing time corresponding to a case where it is assumed that the image processing accelerator 24 that operates at a maximum clock frequency refF executes the "routine processing" on the image included in the print job.

The adjustment period is read out from, for example, the execution time table 23B (see FIG. 2) as the maximum execution time 23B7 (see FIG. 3) of the "image quality adjustment". However, the adjustment period may be acquired from the execution schedule of the image quality adjustment included in the printer status. The adjustment period is an example of a third processing time.

The "overlap" means that the adjustment period and the execution period partially overlap. Therefore, not only a case where the entire adjustment period is included in the execution period but also a case where a part of the adjustment period is included in the execution period and the remaining part is not included in the execution period is treated as the "overlap".

In the present exemplary embodiment, a length of a period in which the adjustment period and the execution period overlap is referred to as an "overlap time".

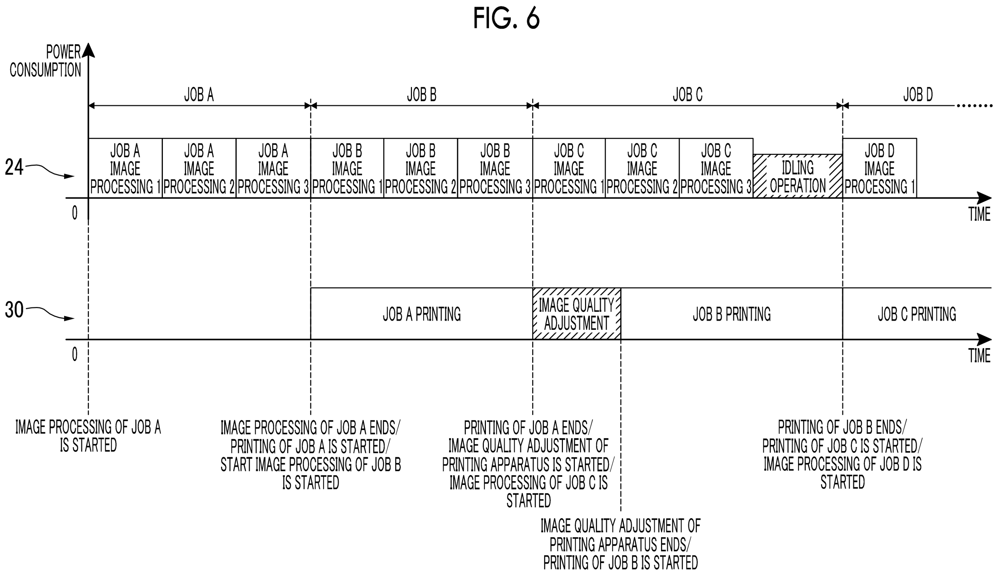

FIG. 6 is a diagram showing a relationship between the execution schedule of the image processing accelerator 24 and the execution schedule of the printing apparatus 30. In FIG. 6, the print job is expressed as a "job". It is assumed that the image processing accelerator 24 executes the image processing in the order of "job A", "job B", "job C", and "job D", and the printing apparatus 30 performs the printing in the order of "job A", "job B", "job C", and "job D".

An upper part of FIG. 6 shows the execution schedule of the image processing accelerator 24. A horizontal axis is time, and a vertical axis is power consumption.

A relationship between the execution schedule and the power consumption shown in the upper part of FIG. 6 corresponds to a conventional system. Therefore, an idling operation is executed in an idle time that occurs during a period of the image processing of the "job C".

In the upper part of FIG. 6, time lengths allocated to the routine processing are expressed as the same length. However, as described above, in a case where the image size 23B1 (see FIG. 3) or the resolution 23B2 (see FIG. 3) is different, the time length allocated to the routine processing also differs.

A lower part of FIG. 6 shows the execution schedule of the printing apparatus 30. A horizontal axis indicates time.

As shown in FIG. 6, the image processing of the image processing accelerator 24 is executed before the printing of the printing apparatus 30.

Therefore, the printing of the "job A" is executed by the printing apparatus 30 after the image processing of the "job A" by the image processing accelerator 24. In a case of FIG. 6, for convenience of description, the time length required for the image processing of the "job B" and the time length required for the printing of the "job A" coincide with each other. In practice, the time length required for the printing of the "job A" is longer than the time length required for the image processing of the "job B".

In the example of FIG. 6, the image quality adjustment of the printing apparatus 30 is started at a point in time at which the image processing accelerator 24 starts the image processing of the "job C". Therefore, the execution period of the image processing of the "job C" overlaps the image quality adjustment period of the printing apparatus 30. In a case of FIG. 6, the overlap time coincides with the time required for the image quality adjustment. Therefore, the idle time corresponding to the overlap time occurs in the time that can be allocated to the image processing of the "job C".

In FIG. 6, the idling operation is executed during the idle time. A frequency of the operating clock used for the idling operation is lower than a frequency of the operating clock used for the image processing. Therefore, the power consumption during the idling operation is lower than the power consumption during the image processing.

FIG. 5 will be referred to again.

In a case where the execution time and the adjustment period do not overlap, a negative result is obtained in step S12. In this case, the processor 21 proceeds to step S13.

In a case where the execution time and the adjustment period overlap, a positive result is obtained in step S12. In this case, the processor 21 proceeds to step S17.

### <Step S13>

Step S13 is executed in a case where the execution time of the print job to be executed next and the adjustment period do not overlap.

The processor 21 determines whether or not the image processing 24A (see FIG. 4) is a part of the routine processing. The image processing 24A here is the image processing defined by the setting information of the print job 23A (see FIG. 2) to be executed next.

In a case where the image processing 24A defined by the print job 23A is a part of the routine processing, a positive result is obtained in step S13. In this case, the processor 21 proceeds to step S14.

In a case where a positive result is obtained in step S13, the clock frequency used for the image processing 24A of the print job 23A can be reduced from the maximum clock frequency.

In a case where the image processing 24A defined by the print job 23A is the routine processing, a negative result is obtained in step S13. In this case, the processor 21 proceeds to step S19.

In a case where a negative result is obtained in step S13, the clock frequency used for the image processing 24A of the print job 23A is set to the maximum clock frequency.

### <Step S14>

Step S14 is executed in a case where the image processing 24A defined by the print job 23A is a part of the routine processing. That is, step S14 is executed in a case where the clock frequency can be reduced from the maximum clock frequency.

The processor 21 determines whether or not the image processing accelerator 24 is used for another task in a case of executing the print job 23A to be executed next.

In a case where the image processing accelerator 24 is used for another task in a case where the print job 23A is executed, a positive result is obtained in step S14. In this case, the processor 21 proceeds to step S19. This is because, in a case where the clock frequency is reduced from the maximum clock frequency, the influence thereof affects the processing of another task.

In a case where the image processing accelerator 24 is not used for another task, a negative result is obtained in step S14. In this case, the processor 21 proceeds to step S15. During a period in which the image processing accelerator 24 is occupied by the image processing 24A of the print job 23A, the clock frequency can be reduced from the maximum clock frequency.

### <Step S15>

Step S15 is executed in a case where a negative result is obtained in step S14.

The processor 21 calculates the new clock frequency.

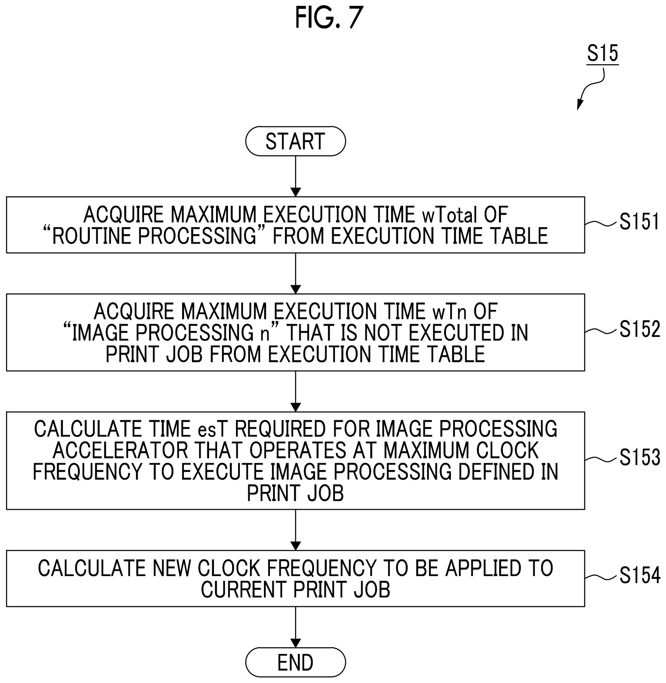

FIG. 7 is a flowchart showing an example of processing content executed in step S15.

First, the processor 21 acquires a maximum execution time wTotal of the "routine processing" from the execution time table 23B (see FIG. 3) (step S151). The maximum execution time wTotal is an example of a first processing time.

Next, the processor 21 acquires a maximum execution time wTn of the "image processing n" that is not executed in the print job 23A from the execution time table 23B (step S152). In the present exemplary embodiment, n is one or two of "1", "2", or "3". The maximum execution time wTn is an example of an expected time.

Subsequently, the processor 21 calculates a time esT required for the image processing accelerator 24 that operates at the maximum clock frequency to execute the image processing 24A defined in the print job (step S153).

The time esT is calculated using, for example, Expression 1. $esT = wTotal - wTn$ Expression 1

For example, in a case where the "image processing 1" is not executed, the time esT is calculated using Expression 2. $esT = wTotal - wT 1$ Expression 2

In a case where there are a plurality of pieces of "image processing n" that are not executed in the print job 23A, the time esT is calculated using, for example, Expression 3. $esT = wTotal - ΣwTn$ Expression 3

The operator Σ means total sum.

For example, in a case where the "image processing 1" and the "image processing 2" are not executed, the time esT is calculated using Expression 4. $esT = wTotal - \left(wT1+wT2\right)$ Expression 4

The time esT may be calculated as the total sum of the maximum execution times of "image processing m" executed in the image processing 24A defined by the print job 23A. In the present exemplary embodiment, m is one or two of "1", "2", or "3".

For example, in a case where the "image processing 2" and the "image processing 3" are executed, the time esT is calculated using Expression 5. $esT = wT 2 + wT 3$ Expression 5

In a case where only the "image processing 3" is executed, the time esT is calculated using Expression 6. $esT = wT 3$ Expression 6

Next, the processor 21 calculates the new clock frequency to be applied to the current print job 23A (step S154).

For example, in a case where the maximum clock frequency is denoted by refF and the new clock frequency to be calculated is denoted by newF, the new clock frequency newF is calculated using Expression 7. $newF = \left(esT/wTotal\right) \times refF$ Expression 7

In a case where the new clock frequency newF is calculated, the processor 21 proceeds to step S16 (see FIG. 5).

FIG. 5 will be referred to again.

### <Step S16>

Step S16 is executed following step S15 or step S18.

The processor 21 sets the new clock frequency newF used for the print job 23A to be executed next, in the image processing accelerator 24.

The new clock frequency newF is applied at a timing at which the image processing accelerator 24 starts the image processing 24A of the next print job 23A. For example, the operating clock of the image processing accelerator 24 is switched from the maximum clock frequency to the new clock frequency newF.

### <Step S17>

Step S17 is executed in a case where the execution period of the image processing overlaps the image quality adjustment period of the printing apparatus. That is, step S17 is executed in a case where a positive result is obtained in step S12.

The processor 21 determines whether or not the image processing accelerator is used for another task in a case where the print job 23A is executed.

The content of the determination is the same as the content of the determination in step S14.

In a case where the image processing accelerator 24 is used for another task in a case where the print job is executed, a positive result is obtained in step S17. In this case, the processor 21 proceeds to step S19.

In a case where the image processing accelerator 24 is not used for another task, a negative result is obtained in step S17. In this case, the processor 21 proceeds to step S18.

### <Step S18>

Step S18 is executed in a case where a negative result is obtained in step S17.

The processor 21 calculates the new clock frequency.

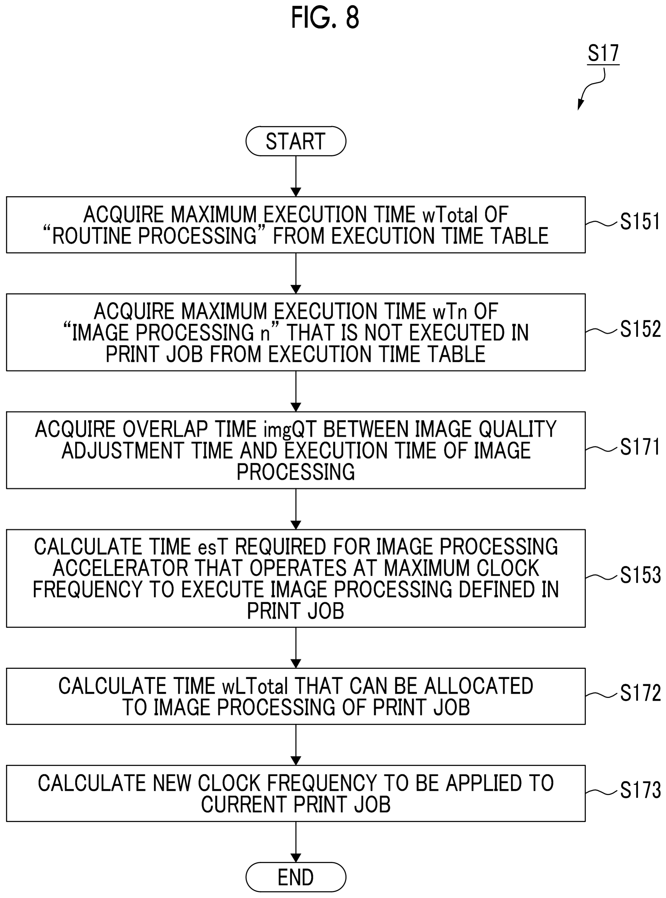

FIG. 8 is a flowchart showing an example of processing content executed in step S17. In FIG. 8, parts corresponding to the parts in FIG. 7 are denoted by the same reference numerals.

In a case of FIG. 8 as well, the processor 21 acquires the maximum execution time wTotal of the "routine processing" from the execution time table 23B (see FIG. 3) (step S151).

Next, the processor 21 acquires the maximum execution time wTn of the "image processing n" that is not executed in the print job 23A from the execution time table 23B (step S152). In the present exemplary embodiment, n is one or two of "1", "2", or "3". In a case where the print job 23A issues an instruction to execute the routine processing, the maximum execution time wTn is 0 (zero).

Next, the processor 21 acquires an overlap time imgQT between the image quality adjustment time and the execution time of the image processing (step S171). In a case of FIG. 6 described above, the overlap time imgQT coincides with the image quality adjustment time.

Subsequently, the processor 21 calculates the time esT required for the image processing accelerator 24 that operates at the maximum clock frequency to execute the image processing 24A defined in the print job (step S153).

Next, the processor 21 calculates a time wLTotal that can be allocated to the image processing of the print job 23A (step S172).

The time wLTotal is calculated as the sum of the maximum execution time wTotal of the "routine processing" acquired in step S151 and the overlap time imgQT acquired in step S171.

That is, the time wLTotal is obtained by Expression 8. $wLTotal = wTotal + imgQT$ Expression 8

Next, the processor 21 calculates the new clock frequency to be applied to the current print job 23A (step S173).

For example, in a case where the maximum clock frequency is denoted by refF and the new clock frequency to be calculated is denoted by newF, the new clock frequency newF is calculated using Expression 9. $\begin{matrix}newF = \left(esT/wLTotal\right) \times refF \\ = \left(esT/\left(wTotal+imgQT\right)\right) \times refF\end{matrix}$ Expression 9

In a case where the new clock frequency newF is calculated, the processor 21 proceeds to step S16 (see FIG. 5).

FIG. 5 will be referred to again.

### <Step S19>

Step S19 is executed in a case where a negative result is obtained in step S13, in a case where a positive result is obtained in step S14, or in a case where a positive result is obtained in step S17.

The processor 21 sets the maximum clock frequency as the clock frequency used for the print job 23A to be executed next, in the image processing accelerator 24.

The new clock frequency newF is applied at the timing at which the image processing accelerator 24 starts the image processing 24A of the next print job 23A. For example, in a case where the immediately preceding print job 23A executes only a part of the routine processing, the operating clock of the image processing accelerator 24 is switched to the maximum clock frequency.

### <Control Example of Clock Frequency>

Hereinafter, a control example of the clock frequency will be described for each case.

### <Case where Negative Result is Obtained in Step S13>

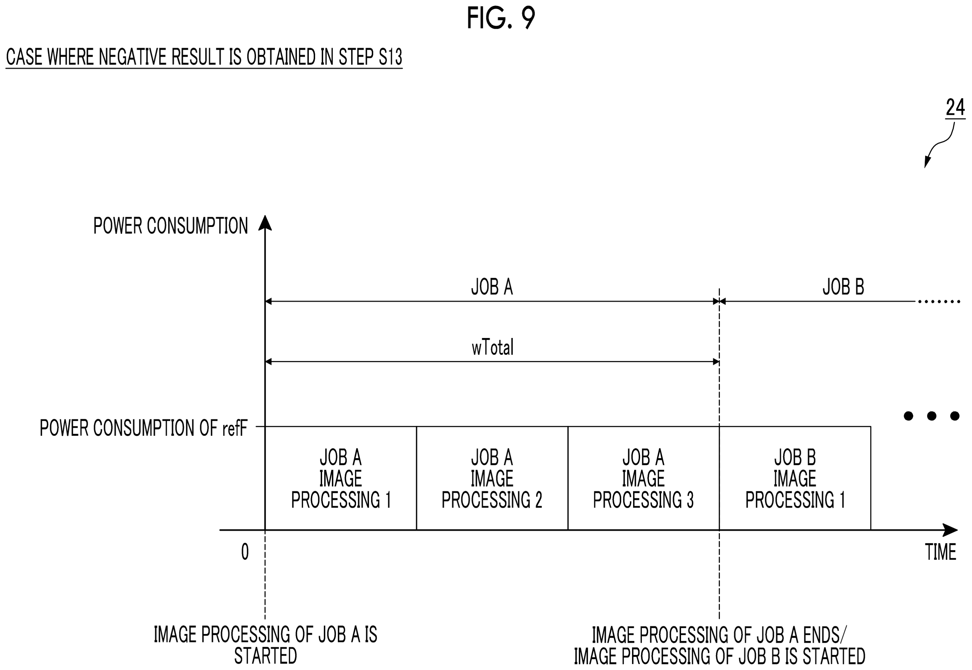

FIG. 9 is a diagram showing an example of the power consumption in a case where the processing period allocated to the print job and the image quality adjustment period of the printing apparatus 30 (see FIG. 1) do not overlap. In FIG. 9, a horizontal axis is time, and a vertical axis is power consumption.

In a case of FIG. 9, the image processing accelerator 24 executes the routine processing. That is, the image processing accelerator 24 executes the "image processing 1", the "image processing 2", and the "image processing 3" in order. Therefore, the periods allocated to the "image processing 1", the "image processing 2", and the "image processing 3" coincide with the maximum execution time wTotal of the "routine processing".

Therefore, the accelerator management unit 21C (see FIG. 4) determines the maximum clock frequency refF as the clock frequency newF used for the image processing of the job A.

The new clock frequency newF can also be calculated using Expression 7 as follows. $\begin{matrix}newF = \left(esT/wTotal\right) \times refF \\ = \left(wTotal/wTotal\right) \times refF \\ = refF\end{matrix}$

Therefore, the power consumption in the "image processing 1", the "image processing 2", and the "image processing 3" coincides with the power consumption in a case where the maximum clock frequency refF is used.

### <Case where Negative Result is Obtained in Step S14 (However, Image Processing 3 Is Not Executed)>

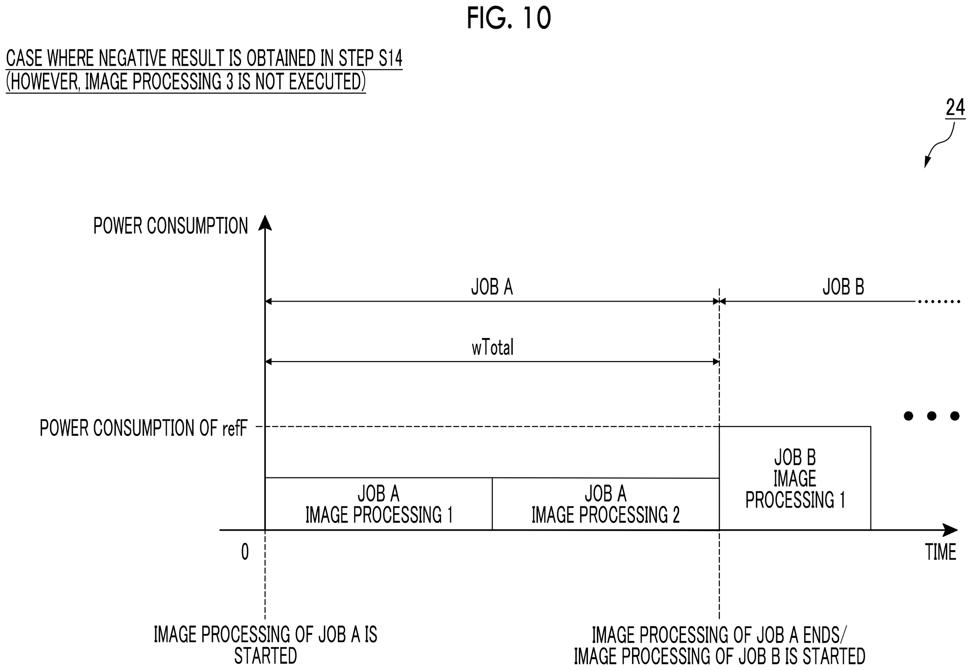

FIG. 10 is a diagram showing another example of the power consumption in a case where the processing period allocated to the print job and the image quality adjustment period of the printing apparatus 30 (see FIG. 1) do not overlap. In FIG. 10, a horizontal axis is time, and a vertical axis is power consumption.

In a case of FIG. 10, the image processing accelerator 24 executes only a part of the routine processing. In a case of the "job A", the image processing accelerator 24 executes the "image processing 1" and the "image processing 2" but does not execute the "image processing 3".

Therefore, in a case where the image processing accelerator 24 processes the "job A" at the maximum clock frequency refF, the idle time corresponding to the processing time of the "image processing 3" occurs.

In the present exemplary embodiment, this idle time is also allocated to the "image processing 1" and the "image processing 2", and the operating clock of the image processing accelerator 24 is reduced from the maximum clock frequency refF.

The clock frequency used for the image processing of the "job A" is calculated using Expression 7 as follows. $\begin{matrix}newF = \left(esT/wLTotal\right) \times refF \\ = \left(\left(wT1+wT2\right)/wLTotal\right) \times refF \\ = \left(\left(wT1+wT2\right)/\left(wT1+wT2+wT3\right)\right) \times refF\end{matrix}$

As described above, it can be seen that newF < refF.

Therefore, the power consumption of the image processing accelerator 24 that operates at the new clock frequency newF is lower than the power consumption in a case where the entire processing period allocated to the "job A" operates at the maximum clock frequency refF.

In addition, since the clock frequency can be reduced during the maximum execution time wTotal, the power consumption can be reduced as compared to a case where the image processing accelerator 24 operates at the clock frequency for idling for the period of the "image processing 3".

### <Case where Positive Result is Obtained in Step S14 (However, Image Processing 3 Is Not Executed)>

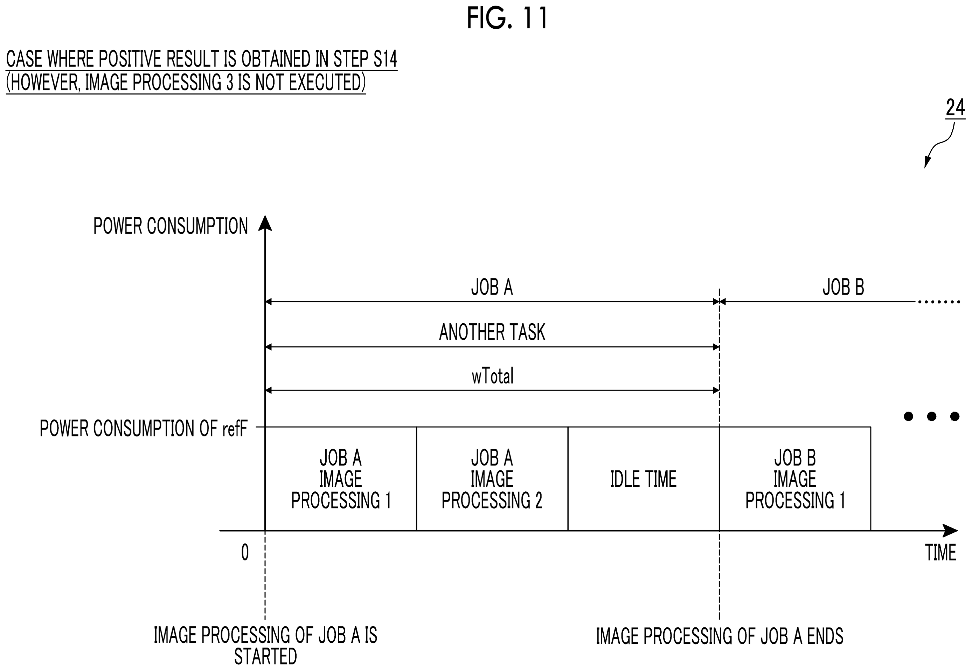

FIG. 11 is a diagram showing still another example of the power consumption in a case where the processing period allocated to the print job and the image quality adjustment period of the printing apparatus 30 do not overlap. In FIG. 11, a horizontal axis is time, and a vertical axis is power consumption.

In a case of FIG. 11 as well, like a case of FIG. 10, the image processing accelerator 24 executes only a part of the routine processing. Specifically, the image processing accelerator 24 executes only the "image processing 1" and the "image processing 2".

However, in a case of FIG. 11, the image processing accelerator 24 executes another task during the period allocated to the "job A".

In a case of FIG. 11, the period in which the image processing accelerator 24 executes another task coincides with the period allocated to the "job A".

However, the period in which the image processing accelerator 24 executes another task may be a part of the period allocated to the image processing of the "job A".

The number of periods in which another task is executed may be plural. At least some of the processing executed in the plurality of periods corresponding to another task may be different from each other.

In any case, the image processing accelerator 24 needs to operate at the maximum clock frequency refF. In a case where the operating clock of the image processing accelerator 24 is reduced from the maximum clock frequency refF, the processing of another task is also delayed. As a result, there is a possibility that another task may not be completed within an assumed time.

Therefore, the image processing accelerator 24 in FIG. 11 executes the "image processing 1" and the "image processing 2" of the "job A" at the maximum clock frequency refF, unlike in a case of FIG. 10.

In this case, the image processing accelerator 24 also operates at the maximum clock frequency refF even during the idle time corresponding to the "image processing 3". Therefore, in FIG. 11, the power consumption during the idle time is the same as the power consumption of the "image processing 1" and the "image processing 2".

As a result, the power consumption during the period allocated to the "job A" is the same as the power consumption in a case where the routine processing is executed (see FIG. 9).

### <Case where Negative Result is Obtained in Step S17>

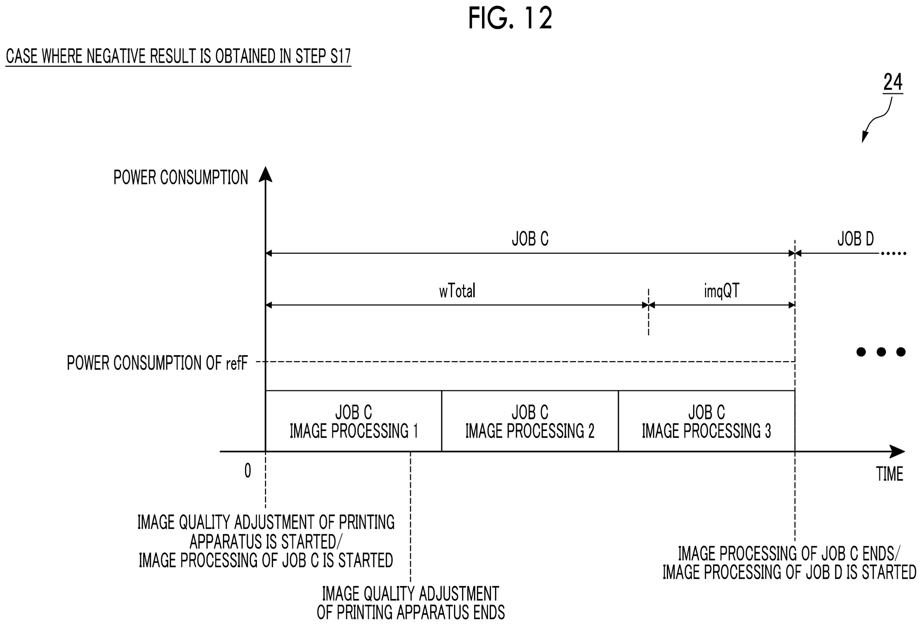

FIG. 12 is a diagram showing an example of the power consumption in a case where the processing period allocated to the print job and the image quality adjustment period of the printing apparatus 30 overlap. In FIG. 12, a horizontal axis is time, and a vertical axis is power consumption.

In a case of FIG. 12, the image processing accelerator 24 executes the routine processing. That is, the image processing accelerator 24 executes the "image processing 1", the "image processing 2", and the "image processing 3" in order.

In a case of FIG. 12, the printing apparatus 30 executes the image quality adjustment during the processing period allocated to the "job C". Therefore, the processing period allocated to the "job C" is longer than the maximum execution time wTotal of the "routine processing" by only the overlap time imgQT with the image quality adjustment.

Therefore, in a case where the image processing accelerator 24 processes the "job C" at the maximum clock frequency refF, the idle time corresponding to the processing time of the overlap time imgQT occurs.

In the present exemplary embodiment, this idle time is also allocated to the "routine processing", and the operating clock of the image processing accelerator 24 is reduced from the maximum clock frequency refF.

The clock frequency used for the image processing of the "job C" is calculated using Expression 9 as follows. $\begin{matrix}newF = \left(esT/wLTotal\right) \times refF \\ = \left(esT/\left(wTotal+imgQT\right)\right) \times refF \\ = \left(wTotal/\left(wTotal+imgQT\right)\right) \times refF\end{matrix}$

As described above, it can be seen that newF < refF.

Therefore, the power consumption of the image processing accelerator 24 that operates at the new clock frequency newF is lower than the power consumption in a case where the entire processing period allocated to the "job C" operates at the maximum clock frequency refF.

In addition, since the clock frequency can be reduced during the processing period (= wTotal + imgQT) allocated to the "job C", the power consumption can be reduced as compared to a case where the image processing accelerator 24 operates at the clock frequency for idling for the period of the overlap period imgQT.

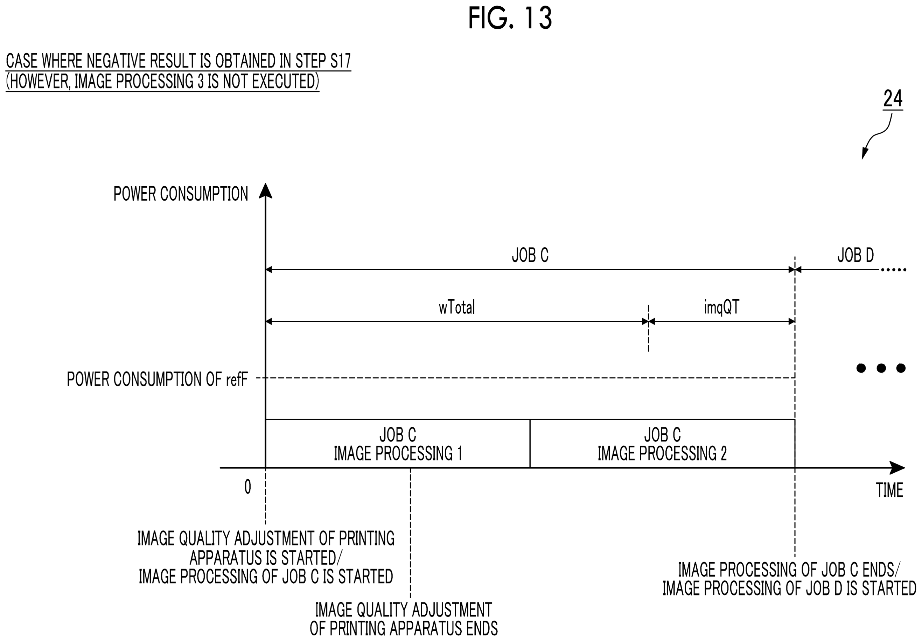

FIG. 13 is a diagram showing another example of the power consumption in a case where the processing period allocated to the print job and the image quality adjustment period of the printing apparatus 30 overlap. In FIG. 13, a horizontal axis is time, and a vertical axis is power consumption.

In a case of FIG. 13, the image processing executed by the image processing accelerator 24 is only the "image processing 1" and the "image processing 2".

Therefore, in FIG. 13, the "image processing 1" and the "image processing 2" are allocated to the processing period (= wTotal + imgQT) allocated to the "job C", and the operating clock of the image processing accelerator 24 is reduced from the maximum clock frequency refF.

The clock frequency used for the image processing of the "job C" is calculated using Expression 9 as follows. $\begin{matrix}newF = \left(esT/wLTotal\right) \times refF \\ = \left(esT/\left(wTotal+imgQT\right)\right) \times refF \\ = \left(\left(wT1+wT2\right)/\left(wTotal+imgQT\right)\right) \times refF\end{matrix}$

Here, wTotal is wT1 + wT2 + wT3, so that newF is further smaller than newF in a case of FIG. 12.

Therefore, in a case of FIG. 13, the power consumption can be further reduced as compared to a case of FIG. 12.

### <Case where Positive Result is Obtained in Step S17>

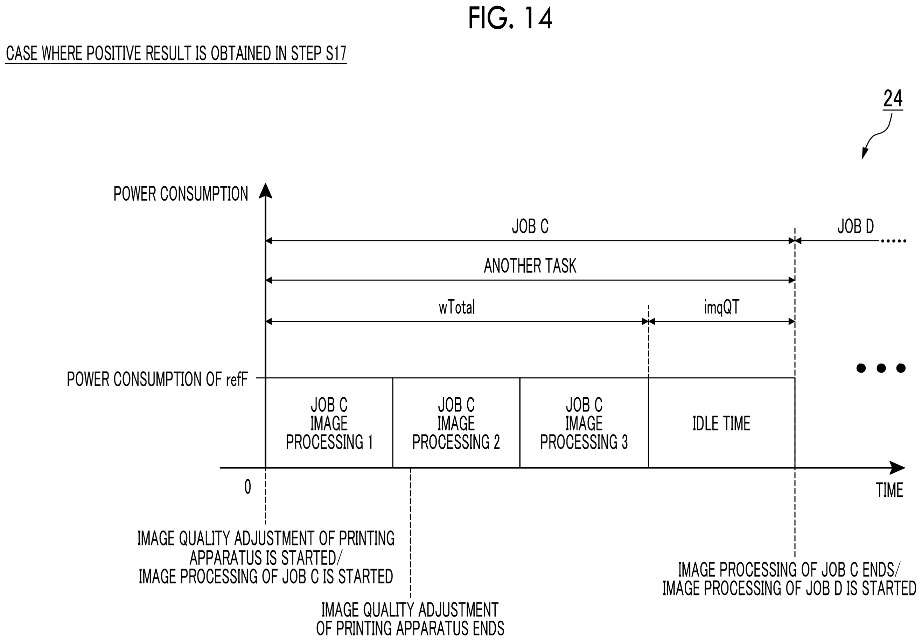

FIG. 14 is a diagram showing still another example of the power consumption in a case where the processing period allocated to the print job and the image quality adjustment period of the printing apparatus 30 overlap. In FIG. 14, a horizontal axis is time, and a vertical axis is power consumption.

In a case of FIG. 14 as well, like a case of FIG. 12, the image processing accelerator 24 executes the routine processing. Specifically, the image processing accelerator 24 executes the "image processing 1", the "image processing 2", and the "image processing 3".

However, in a case of FIG. 14, the image processing accelerator 24 executes another task during the period allocated to the "job C".

Therefore, the image processing accelerator 24 in FIG. 14 executes the "routine processing" of the "job C" at the maximum clock frequency refF, unlike in a case of FIG. 12.

In this case, the image processing accelerator 24 also operates at the maximum clock frequency refF even during the idle time corresponding to the overlap time imgQT. Therefore, in FIG. 14, the power consumption during the idle time is the same as the power consumption of the "image processing 1", the "image processing 2", and the "image processing 3".

In a case where the image processing indicated by the "job C" is a part of the routine processing, the idle time is increased by the period of the image processing that is not executed.

### <Summary>

As described above, in the print job in which the image processing accelerator 24 executes only a part of the routine processing, the operating clock can be reduced from the maximum clock frequency as long as another task is not executed at the same time. As a result, it is possible to reduce the power consumption of the image processing accelerator 24 as compared to a case where the idle time of the image processing is controlled to the idling period.

### <Exemplary Embodiment 2>

In Exemplary Embodiment 2, another control example of the clock frequency will be described.

The system configuration of the printing system 1 (see FIG. 1) or the configuration of each apparatus connected to the network N is the same as that in Exemplary Embodiment 1.

Hereinafter, a difference from Exemplary Embodiment 1 will be focused on.

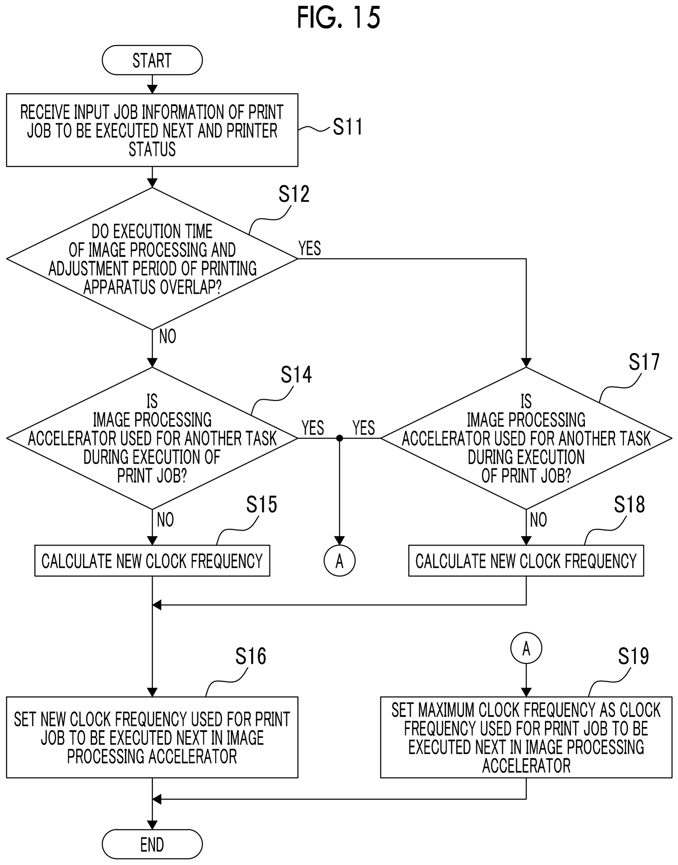

FIG. 15 is a flowchart showing the control processing of the clock frequency by the processor 21 (see FIG. 4) according to Exemplary Embodiment 2. In FIG. 15, parts corresponding to the parts in FIG. 5 are denoted by the same reference numerals.

The control processing shown in FIG. 15 is different from the control processing of Exemplary Embodiment 1 in that step S13 (see FIG. 5) is not executed.

That is, in the control processing according to the present exemplary embodiment, it is not determined whether or not the image processing requested by the print job coincides with the routine processing.

However, the new clock frequency newF calculated in step S15 is the same as the content of the conditional branching in step S13.

For example, in a case where the image processing requested by the print job is the routine processing, the new clock frequency newF calculated in step S15 is calculated using Expression 7 as follows. $\begin{matrix}newF = \left(esT/wTotal\right) \times refF \\ = \left(wTotal/wTotal\right) \times refF \\ = refF\end{matrix}$

This clock frequency is the same value as the clock frequency in a case where a negative result is obtained in step S13.

The new clock frequency newF calculated in step S15 in a case where the image processing requested by the print job is a part of the routine processing is the same as the new clock frequency newF in Exemplary Embodiment 1.

### <Summary>

In the present exemplary embodiment, the control processing executed by the accelerator management unit 21C can be simplified as compared to Exemplary Embodiment 1.

### <Other Exemplary Embodiments>

(1) While the exemplary embodiments of the present invention have been described above, the technical scope of the present invention is not limited to the scope of the above-described exemplary embodiments. According to the claims, the above-described exemplary embodiments to which various modifications or improvements are added also falls within the technical scope of the present invention.
(2) In the above-described exemplary embodiments, the accelerator management unit 21C (see FIG. 4) that adjusts the clock frequency of the image processing accelerator 24 (see FIG. 4) is provided in the print server 20 (see FIG. 1). However, in a case where the clock frequency of the image processing accelerator 24 is adjusted, the accelerator management unit 21C may be provided in an external apparatus to the print server 20.
(3) In the above-described exemplary embodiments, a case has been described in which the accelerator management unit 21C acquires the maximum execution time wTotal of the "routine processing" from the execution time table 23B (see FIG. 3), but the maximum execution time wTotal may be calculated for each print job. In addition, the accelerator management unit 21C may acquire the maximum execution time wTotal of the "routine processing" from a linked external apparatus.
(4) In the above-described exemplary embodiments, a case has been described in which the clock frequency of the image processing accelerator 24 of the print server 20 is adjusted in accordance with the content of the image processing requested by the print job. However, the processing device that adjusts the clock frequency in accordance with the content of the image processing requested by the print job may be a device other than the image processing accelerator 24.
(5) In the above-described exemplary embodiments, the new clock frequency newF is calculated using Expression 7, but a table in which the new clock frequency newF is associated with a combination of the content of the image processing requested by the print job may be prepared. In addition, in a case where the processing time for the image quality adjustment or the like executed by the printing apparatus 30 can be predicted in advance, a table in which the new clock frequency newF is associated with a combination of the processing time of the image quality adjustment or the like and the content of the image processing requested by the print job may be prepared.
(6) In the exemplary embodiments, the processes are performed by any computer. The computer may perform the processes by using a processor serving as hardware, a program serving as software, or combination of these.

In this case, the processor is configured to perform the processes in the exemplary embodiments in cooperation with the program and may function as a unit or a means in the exemplary embodiments.

The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU).

Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage).

The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

(7) The present invention can also be applied to a program and a program product.

### <Supplementary Note>

(((1))) An information processing system comprising:
   a processor configured to:
   calculate a first processing time assuming that a processing device that operates at a maximum clock frequency executes routine processing on an image included in a print job; and
   control a clock frequency used by the processing device for image processing defined in the print job such that the image processing ends within the calculated first processing time.
(((2))) The information processing system according to (((1))), wherein the processor is configured to:
   control the clock frequency used for the image processing based on a relationship between the first processing time and a second processing time in a case where the image processing is executed at the maximum clock frequency.
(((3))) The information processing system according to (((2))), wherein the processor is configured to:
   in a case where the second processing time is shorter than the first processing time, reduce the clock frequency to be lower than the maximum clock frequency such that the image processing ends within the first processing time.
(((4))) The information processing system according to any one of (((1))) to (((3))), wherein the processor is configured to:
   in a case where a part of the routine processing is not executed in the image processing, reduce the clock frequency to be lower than the maximum clock frequency such that the image processing ends within the first processing time.
(((5))) The information processing system according to (((4))), wherein the processor is configured to:
   in a case where the routine processing is executed as the image processing, use the maximum clock frequency for the image processing.
(((6))) The information processing system according to any one of (((1))) to (((5))), wherein the processor is configured to:
   in a case where
      the first processing time is denoted by wTotal, and
      an expected time required for the processing device to execute processing content that is not executed in the print job in the routine processing at the maximum clock frequency denoted by refF is denoted by wT,
   calculate a time esT required for the processing device that operates at the maximum clock frequency refF to execute processing content of the image processing as $esT = wTotal - wT ;$ and
   calculate a new clock frequency newF that enables the processing content of the image processing to end within the first processing time as $newF = \left(esT/wTotal\right) \times refF .$
(((7))) The information processing system according to any one of (((1))) to (((6))), wherein the processor is configured to:
   in a case where at least a part of a third processing time during which processing other than printing executed by a printing device overlaps the first processing time,
   control the clock frequency used by the processing device for the image processing such that the image processing ends within a total time of an overlap time between the first processing time and the third processing time and the first processing time.
(((8))) The information processing system according to (((7))), wherein the processor is configured to:
   in a case where
      the first processing time is denoted by wTotal,
      an expected time required for the processing device to execute processing content that is not executed in the print job in the routine processing at the maximum clock frequency denoted by refF is denoted by wT, and
      the overlap time is denoted by imgQT,
   calculate a time esT required for the processing device that operates at the maximum clock frequency refF to execute the image processing as $esT = wTotal - wT ;$ and
   calculate a new clock frequency newF that enables the image processing to end within the total time as $newF = \left(esT/\left(wTotal+imgQT\right)\right) \times refF .$
(((9))) The information processing system according to any one of (((1))) to (((8))),
   wherein the processing device is an image processing accelerator.
(((10))) A program causing a computer to implement:
   a function of calculating a first processing time assuming that a processing device that operates at a maximum clock frequency executes routine processing on an image included in a print job; and
   a function of controlling a clock frequency used by the processing device for image processing of processing content defined in the print job such that the image processing ends within the calculated first processing time.

With the information processing system according to (((1))), the reduction in power consumption within the processing period allocated to the print job may be achieved as compared to a case where the idle time of the image processing is controlled to the idling period.

With the information processing system according to (((2))), the power consumption within the processing time allocated to the print job may be controlled based on the relationship between the image processing and the routine processing.

With the information processing system according to (((3))), the power consumption within the processing time allocated to the print job may be reduced in a case where the processing time required for the image processing at the maximum clock frequency is shorter than the processing time required for the routine processing at the maximum clock frequency.

With the information processing system according to (((4))), the power consumption within the processing time allocated to the print job may be reduced in a case where a part of the routine processing is not executed in the image processing.

With the information processing system according to (((5))), in the print job in which the routine processing is executed as the image processing, the completion of the image processing within the processing time allocated to the print job may be prioritized.

With the information processing system according to (((6))), the clock frequency used for the image processing may be calculated in accordance with the processing content of the image processing.

With the information processing system according to (((7))), the standby time of the processing device that occurs in order for the printing device to execute the processing other than the printing may be used to reduce the clock frequency.

With the information processing system according to (((8))), the power consumption in the image processing may be reduced.

With the information processing system according to (((9))), the power consumption of the image processing accelerator may be reduced.

With the program according to (((10))), the reduction in power consumption within the processing period allocated to the print job may be achieved as compared to a case where the idle time of the image processing is controlled to the idling period.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: printing system
10: client terminal
20: print server
21: processor
21A: preprocessing unit
21B: clock frequency control unit
21C: accelerator management unit
22: semiconductor memory
23: auxiliary storage device
23A: print job
23B: execution time table
24: image processing accelerator
25: communication interface
26: signal line
30: printing apparatus

## Claims

1. An information processing system comprising:
a processor configured to:
calculate a first processing time assuming that a processing device that operates at a maximum clock frequency executes routine processing on an image included in a print job; and
control a clock frequency used by the processing device for image processing defined in the print job such that the image processing ends within the calculated first processing time.

2. The information processing system according to claim 1, wherein the processor is configured to:
control the clock frequency used for the image processing based on a relationship between the first processing time and a second processing time in a case where the image processing is executed at the maximum clock frequency.

3. The information processing system according to claim 2, wherein the processor is configured to:
in a case where the second processing time is shorter than the first processing time, reduce the clock frequency to be lower than the maximum clock frequency such that the image processing ends within the first processing time.

4. The information processing system according to any one of claims 1 to 3, wherein the processor is configured to:
in a case where a part of the routine processing is not executed in the image processing, reduce the clock frequency to be lower than the maximum clock frequency such that the image processing ends within the first processing time.

5. The information processing system according to claim 4, wherein the processor is configured to:
in a case where the routine processing is executed as the image processing, use the maximum clock frequency for the image processing.

6. The information processing system according to any one of claims 1 to 5, wherein the processor is configured to:
in a case where
the first processing time is denoted by wTotal, and
an expected time required for the processing device to execute processing content that is not executed in the print job in the routine processing at the maximum clock frequency denoted by refF is denoted by wT,
calculate a time esT required for the processing device that operates at the maximum clock frequency refF to execute processing content of the image processing as $esT = wTotal - wT ;$ and
calculate a new clock frequency newF that enables the processing content of the image processing to end within the first processing time as $newF = \left(esT/wTotal\right) \times refF .$

7. The information processing system according to any one of claims 1 to 6, wherein the processor is configured to:
in a case where at least a part of a third processing time during which processing other than printing executed by a printing device overlaps the first processing time,
control the clock frequency used by the processing device for the image processing such that the image processing ends within a total time of an overlap time between the first processing time and the third processing time and the first processing time.

8. The information processing system according to claim 7, wherein the processor is configured to:
in a case where
the first processing time is denoted by wTotal,
an expected time required for the processing device to execute processing content that is not executed in the print job in the routine processing at the maximum clock frequency denoted by refF is denoted by wT, and
the overlap time is denoted by imgQT,
calculate a time esT required for the processing device that operates at the maximum clock frequency refF to execute the image processing as $esT = wTotal - wT ;$ and
calculate a new clock frequency newF that enables the image processing to end within the total time as $newF = \left(esT/\left(wTotal+imgQT\right)\right) \times refF .$

9. The information processing system according to any one of claims 1 to 8,
wherein the processing device is an image processing accelerator.

10. A program causing a computer to implement:
a function of calculating a first processing time assuming that a processing device that operates at a maximum clock frequency executes routine processing on an image included in a print job; and
a function of controlling a clock frequency used by the processing device for image processing of processing content defined in the print job such that the image processing ends within the calculated first processing time.

11. An information processing method comprising:
calculating a first processing time assuming that a processing device that operates at a maximum clock frequency executes routine processing on an image included in a print job; and
controlling a clock frequency used by the processing device for image processing of processing content defined in the print job such that the image processing ends within the calculated first processing time.
